# EUROPEAN PATENT SPECIFICATION

(11) **EP 2 065 717 B1**
(45) Date of publication and mention of the grant of the patent: **05.12.2012**
(21) Application number: 08161437.2
(22) Date of filing: 30.07.2008
(51) Int. Cl.: G06F 11/273, B60W 50/00, G07C 5/08

(54) **Hand-held diagnosis device for vehicles**
Tragbare Diagnosevorrichtung für Fahrzeuge
Dispositif de diagnostic portatif pour véhicules

(30) Priority: 29.11.2007 TW 96145300
(43) Date of publication of application: 03.06.2009
(73) Proprietor: Kwang Yang Motor Co., Ltd., San-Min Dist., Kaohsiung City (TW)
(72) Inventor: Tsai, Yi-Yang, Kaohsiung Hsien (TW); Huang, Qin-Sheng, Kaohsiung (TW); Chang, Sen-Shiann, Kaohsiung (TW)
(74) Representative: Dossmann, Gérard

(56) References cited:
- GB-A- 2 222 701

## Description

The present invention relates to a diagnosis device, especially to a hand-held diagnosis device for vehicles such as automobiles, motorcycles and the like.

A diagnosis device for vehicles is used for detecting states and malfunctions of a vehicle without dismantling a body of the vehicle and inspecting inner parts of the vehicle.

Diagnosis devices used on vehicles having jet engines may be implemented as a hardware-type diagnosis device, a software-type diagnosis device or a personal digital assistant (PDA) with a diagnosing function.

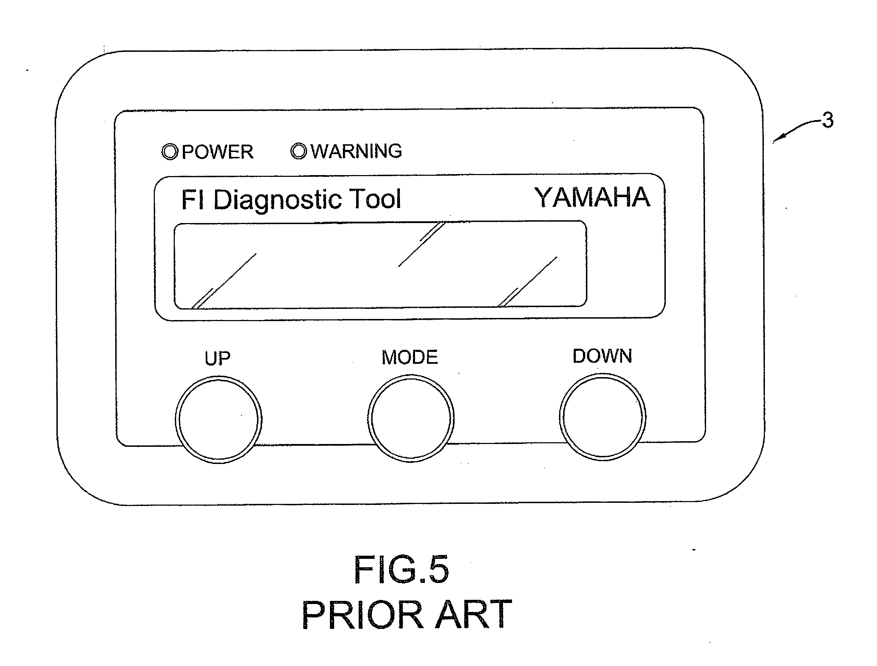

Fig. 5 shows a conventional hardware-type diagnosis device (3) manufactured by Yamaha Motor. This diagnosis device (3) only fit for vehicles of designated brands and is hard to update software of the diagnosis device (3). If need to diagnose vehicles of other brands, the owner is forced to buy another diagnosis device. Besides, diagnosis data are only displayed temporarily and unable to be stored.

A software-type diagnosis device has to combine with a computer to execute its diagnosing function. When diagnosing a vehicle, the diagnosis device must use a serial port of the computer to communicate with the vehicle. Therefore diagnosing vehicles is inconvenient since the ponderous computer is not portable.

A personal digital assistant (PDA) with a diagnosing function is a power-hungry device and easily causes power failure when diagnosing vehicles.

From document GB 222271 a hand-held diagnostic device for a vehicle having an electronic control unit with the features of the preamble of claim 1 has become known.

To overcome the shortcomings, the present invention provides a hand-held diagnosis device to mitigate or obviate the aforementioned problems.

The main objective of the present invention is to provide a hand-held diagnosis device that is easy to carry and operate, connects to a personal computer to update firmware to fit for vehicles of different brands or makers and directly uses the electric power of the vehicle.

To achieve the objective, the present invention provides a hand-held diagnosis device according to claim 1. The dependent claims relate to advantageous embodiments.

The diagnosis device has advantages as follows:
1. Because the micro-controller unit of the diagnosis device has an MCU-firmware update program, the diagnosis device can connect to a personal computer to update corresponding firmware for the micro-controller unit to fit for any vehicles of different brands or makers.
2. Diagnosis data of the diagnosis device can be stored on a memory card through the storage interface to record all information of the diagnosis process for helping with malfunction analysis.
3. When diagnosing a vehicle, the diagnosis device can directly use the electric power of the battery of the vehicle and will not have power failure.
4. The diagnosis device can directly connect to an electronic control unit of a vehicle via the cable to diagnose problems of the vehicle without using a computer, so the diagnosis device is easy to carry and operate.

Other objectives, advantages and novel features of the invention will become more apparent from the following detailed description when taken in conjunction with the accompanying drawings.

In the drawings:
Fig. 1 is an operational view of a hand-held diagnosis device in accordance with the present invention;
Fig. 2 is a block diagram of a hand-held diagnosis device in accordance with the present invention;
Fig. 3 is a circuit diagram of a hand-held diagnosis device in accordance with the present invention;
Fig. 4 is a flowchart of a firmware-updating process between a hand-held diagnosis device and a personal computer; and
Fig. 5 is a front view of a conventional diagnosis device.

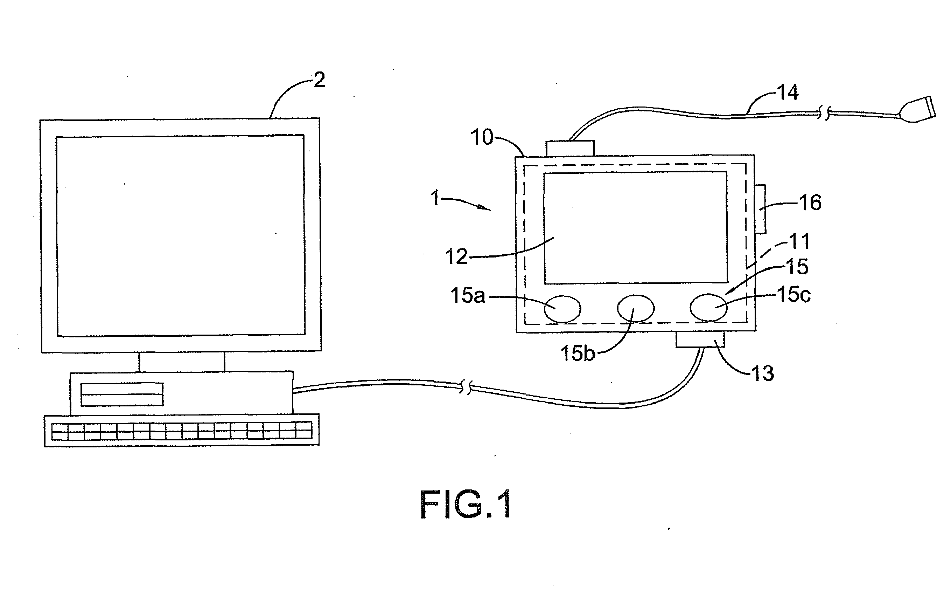

With reference to Fig. 1, a hand-held diagnosis device (1) for vehicles in accordance with the present invention is adapted to connect to a personal computer (2). The diagnosis device (1) comprises a body (10), a circuit module (11), a display unit (12), a communication port (13), a cable (14) and a button set (15).

The body (10) is palm-sized and may be a casing, a box or the like.

The circuit module (11) is mounted in the body (10).

The display unit (12) is mounted on the body (10) and connected to the circuit module (11) to display data sent from the circuit module (11) and may be implemented as a liquid crystal display module.

The communication port (13) is mounted on the body (10) and connected to the circuit module (11) and may be implemented as a RS232 serial port.

The cable (14) is connected to the circuit module (11).

The button set (15) is mounted on the body (10) and comprises multiple press buttons (15a, 15b, 15c) being connected to the circuit module (11).

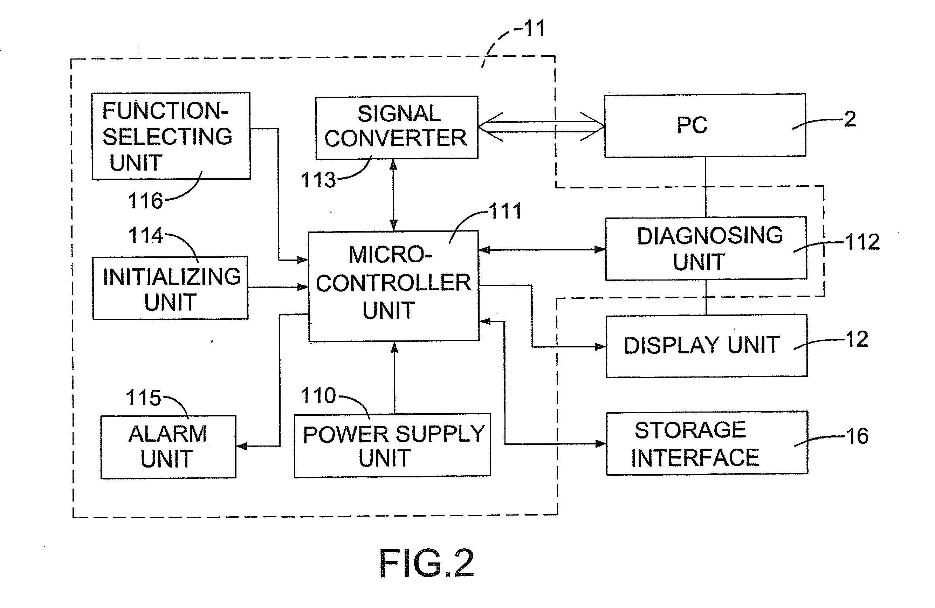

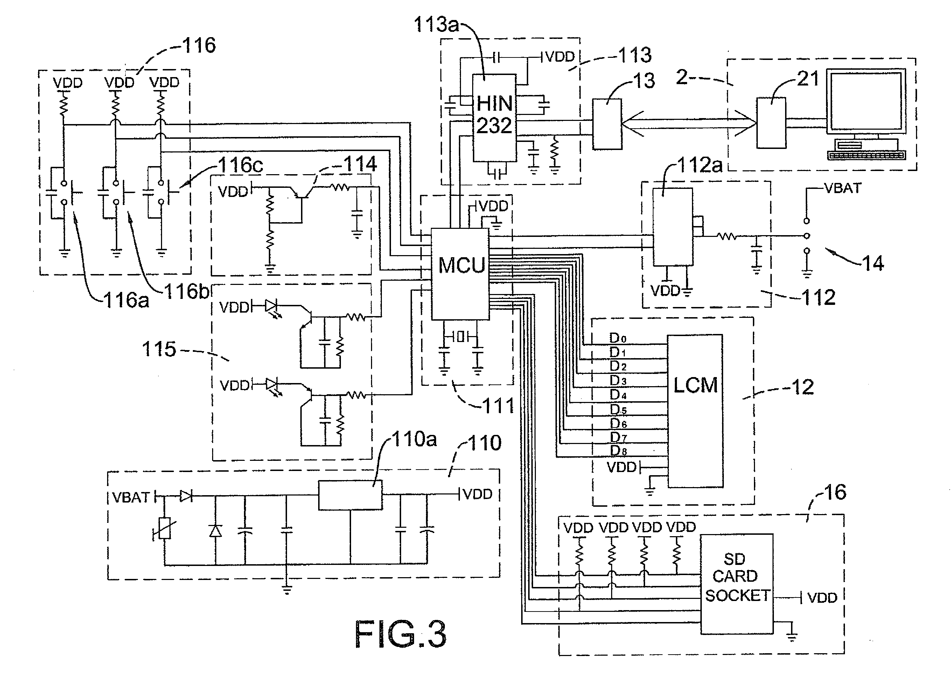

With further reference to Figs. 2 and 3, the circuit module (11) may comprise an optional power supply unit (110), a micro-controller unit (MCU) (111), a diagnosing unit (112), a signal converter (113), an optional initializing unit (114), an optional alarm unit (115) and an optional function-selecting unit (116).

The power supply unit (110) provides power to all electronic elements of the hand-held diagnosis device (1) and may have a voltage-stabilizer (110a) for providing a stable voltage.

The micro-controller unit (111) is connected to the power supply unit (110) and has a boot sector and a program sector. The boot sector has an MCU-firmware update program. The MCU-firmware update program corresponds to a computer software providing a firmware-updating program to be executed for updating firmware of the micro-controller unit (111). The computer software is installed on the personal computer (2) and the firmware-updating program provides a firmware-updating function. When updating firmware, a control authority of the micro-controller unit (111) is controlled by the MCU-firmware update program of the boot sector and the computer software embeds an updating code in the boot sector.

The diagnosing unit (112) is connected to the micro-controller unit (111) and the cable (14) and has a communication signal-processing chip (112a). The communication signal-processing chip (112a) may be implemented as a communication signal-processing chip with two inputs and one output that corresponds with international standards and can be widely used. When the cable (14) connects to an electronic control unit (ECU) of a vehicle, the diagnosing unit (112) then diagnoses states of the vehicle via the cable (14). Furthermore, the cable (14) is also a transfer medium that transfers electric power of a battery of the vehicle to electronic elements of the hand-held diagnosis device (1).

The signal converter (113) is connected to the micro-controller unit (111) and the communication port (13) and may be a HIN232 integrated circuit. When the communication port (13) of the hand-held diagnosis device (1) connects to a communication port (21) of the personal computer (2) via an RS232 cable, the signal converter (113) then converts serial data sent from the personal computer (2) into readable format for the micro-controller unit (111).

The initializing unit (114) is connected to the micro-controller unit (111) and executes an initialization of the micro-controller unit (111) after turning on the hand-held diagnosis device (1).

The alarm unit (115) is connected to the micro-controller unit (111) and has multiple light-emitting elements. The light-emitting elements may be mounted on the body (10) and emit lights to respectively represent different operating information of the hand-held diagnosis device (1). The micro-controller unit (111) may drive one light-emitting element for warning of malfunctions of the vehicle, another for power indication of the diagnosis device (1) and still another for indicating connection between the diagnosis device (1) and the vehicle.

In one embodiment of the present invention, the alarm unit (115) has two light-emitting elements respectively representing a power indication and a malfunction indication. The light-emitting element of power indication indicates whether the power of the diagnosis device (1) is turned on and keeps flashing when the diagnosis device (1) is working. The light-emitting element of malfunction indication indicates that malfunction of the vehicle has been detected.

The function-selecting unit (116) comprises multiple switches. The switches are connected to the micro-controller unit (111) and may be two select-switches (116a, 116c) and one confirm-switch (116b) being correspondingly activated by the press buttons (15a, 15b, 15c) of the button set (15). Therefore, a user can press each of the press buttons (15a, 15b, 15c) to activate each of the switches (116a, 116b, 116c) and command the micro-controller unit (111). The press buttons (15a, 15b, 15c) are then implemented as two select-buttons (15a, 15c) with up and down pointers and one confirm-button (15b) due to the corresponding switches of the function-selecting unit (116).

The hand-held diagnosis device further comprises a storage interface (16). The storage interface (16) is connected to the micro-controller unit (111) and adapted to connect to a memory card for recording diagnosis data of the vehicle and may be implemented as a memory card socket for SD (Secure Data Disk) card, micro SD card and the like.

In practice, the hand-hand diagnosis device (1) of the present invention electrically connects to an electronic control unit of a vehicle via the cable (14) and starts to diagnose the vehicle and generates diagnosis data. The display unit (12) then display the diagnosis data. A user can press different press buttons (15a, 15b, 15c) to switch a displayed screen on the display unit (12). The diagnosis data can be further stored in a SD memory card via the storage interface (16). To perform a firmware-updating process on the diagnosis device (1), the user first connects the diagnosis device (1) and the personal computer (2) with the communication port (13). Then the user executes the MCU-firmware update program of the micro-controller unit (111) by using the firmware-updating program of the computer software installed on the personal computer (2).

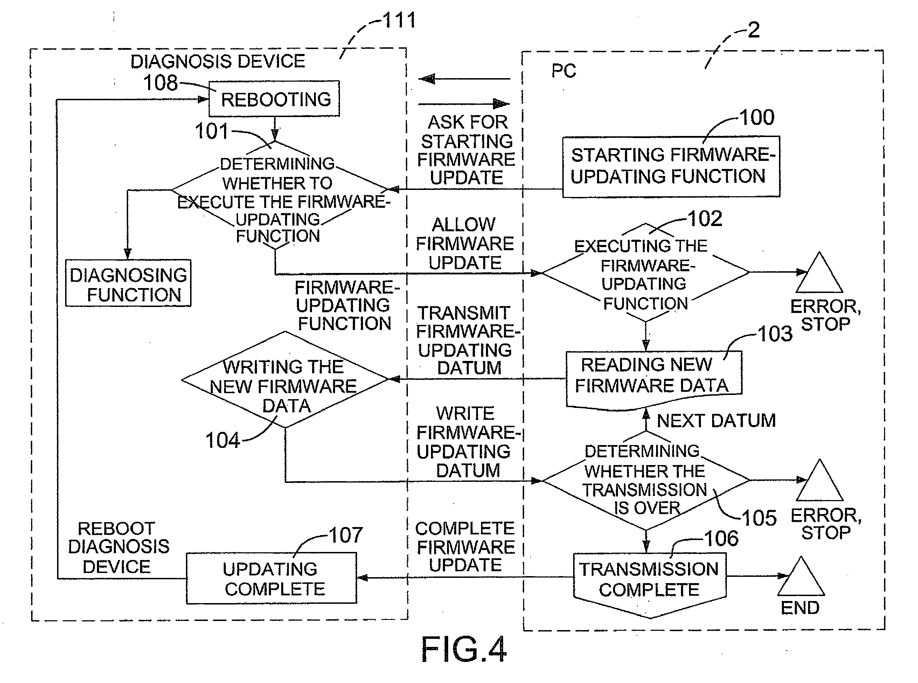

With further reference to Fig. 4, the firmware-updating process between the micro-controller unit (111) and the personal computer (2) comprises steps of starting firmware-updating function (100), determining whether to execute the firmware-updating function (101), executing the firmware-updating function (102), reading firmware-updating data (103), writing the firmware-updating data (104), determining whether the transmission is finished (105), transmission complete (106), updating complete (107) and rebooting (108).

In the step of starting firmware-updating function (100), the personal computer (2) executes the firmware-updating program of the computer software installed on the personal computer (2) and the firmware-updating program asks the diagnosis device (1) to response whether to start to update firmware.

In the step of determining whether to execute the firmware-updating function (101), the MCU-frmware update program of the diagnosis device (2) determines whether to perform firmware-updating or diagnosing, if determines to update firmware, then responses to the personal computer (2) to start to update firmware, wherein the boot sector in the micro-controller unit (111) receives and confirms signals sent from the personal computer (2) and then returns a confirm signal to the personal computer (2).

In the step of executing the firmware-updating function (102), the personal computer (2) communicates with the diagnosis device (1) with a serial communication protocol, starts to transmit firmware-updating data after receiving the confirm signal from the diagnosis device (1) and stops updating firmware when an error occurs.

In the step of reading firmware-updating data (103), the personal computer (2) reads the firmware-updating data datum by datum and transmits the data to the diagnosis device (1) via the communication port (13), wherein each firmware-updating datum from the updating code of the computer software is sent out after communicating with the micro-controller unit (111).

In the step of writing the firmware-updating data (104), the diagnosis device (2) stores the firmware-updating data after receiving the firmware-updating data.

In the step of determining whether transmission is finished (105), the personal computer (2) determines whether all of the firmware-updating data has been sent to the diagnosis device (1), if not, proceed to step of reading firware-updating data (103) and stop updating firmware when an error occurs, if yes, proceed to the next step (106).

In the step of transmission complete (106), the personal computer (2) closes the firmware-updating program and sends a message that informs the firmware-updating process has been finished to the diagnosis device (1), the micro-controller unit (111) that gave the control authority to the boot sector then receives the message and confirm firmware-updating is finished.

In the step of updating complete (107), the diagnosis device (1) closes the MCU-firmware update program and the micro-controller unit (111) prepares to start an automatic reboot program to reboot the diagnosis device (1) and moves the control authority to the program sector in the micro-controller unit (111).

In the step of rebooting (108), after finishing updating firmware, the diagnosis device (1) then automatically reboots and displays screen images of diagnosing on the display unit (12), and firmware-updating process is complete.

In conclusion, the present invention has advantages as follows:
1. The micro-controller unit (111) of the diagnosis device (1) can connect to a personal computer via the communication port (16) to update corresponding firmware based on vehicles of different brands or makers, therefore the diagnosis device (1) is capable of diagnosing different vehicles.
2. Diagnosis data of the diagnosis device (1) can be stored on a memory card through the storage interface (16) to record all information of the diagnosis process for helping with malfunction analysis.
3. The diagnosis device (1) can directly connect to an electronic control unit of a vehicle via the cable (14) to diagnose problems of the vehicle without using a computer, so the diagnosis device is easy for carrying and operation.
4. When diagnosing a vehicle, the diagnosis device (1) can directly use the electric power of the battery of the vehicle and will not have power failure.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A hand-held diagnosis device (1) for a vehicle having an electronic control unit (ECU), the hand-held diagnosis device (1) comprising a body (10), a circuit module (11) being mounted in the body (10), a display unit (12) being mounted on the body (10) and connected to the circuit module (11), a cable (13) being adapted to connect to the electronic control unit (ECU) of the vehicle and being connected to the circuit module (11), and a button set (15) being mounted on the body (10) and connected to the circuit module (11), the hand-held diagnosis device (1) being **characterized in that**:
the hand-held diagnosis device (1) has a communication port (13) being mounted on the body (10) and connected to the circuit module (11);
the circuit module (11) comprises
a micro-controller unit (111) having
a boot sector having an MCU-firmware update program; and
a program sector;
a diagnosing unit (112) being connected to the micro-controller unit (111) and the cable (14) and diagnosing states of the vehicle via the cable (14) when the cable (14) connects to the electronic control unit (ECU) of the vehicle; and
a signal converter (113) being connected to the micro-controller unit (111) and the communication port (13) and converting serial data from the communication port (13) into readable format for the micro-controller unit (111);
a storage interface (16) connected to the micro-controller unit (111) and adapted to connect to a memory card that records diagnosis data of the vehicle; and
the communication port (13) is adapted to connect to a personal computer (2) having a computer software providing a firmware-updating program to allow the personal computer (2) to perform a firmware-updating process on the micro-controller unit (111); and
wherein the diagnosis device (1) itself is capable of storing the firmware-updating data
received from the personal computer and is adapted to automatically reboot and display screen images of diagnosing on the display unit (12) after finishing updating firmware.

2. The hand-held diagnosis device as claimed in claim 1, wherein the circuit module (11) further comprises
a power supply unit (110) providing power to all electronic elements of the hand-held diagnosis device (1);
an initializing unit (114) being connected to the micro-controller unit (111) and executing an initialization of the micro-controller unit (111) after turning on the hand-held diagnosis device (1);
an alarm unit (115) being connected to the micro-controller unit (111) and having multiple light-emitting elements for respectively representing different operating information of the hand-held diagnosis device (1); and
a function-selecting unit (116) having multiple switches being connected to the micro-controller unit (111) for commanding the micro-controller unit (111) by activating the switches.

3. The hand-held diagnosis device as claimed in claim 1, wherein the display unit (12) is a liquid crystal display module.

4. The hand-held diagnosis device as claimed in claim 1, wherein the diagnosing unit (112) has a communication signal-processing chip (112a) with two inputs and one output.

5. The hand-held diagnosis device as claimed in claim 1, wherein the communication port (13) is a RS232 serial port.

6. The hand-held diagnosis device as claimed in claim 5, wherein the communication port (13) of the diagnosis device (112) is adapted to be electrically connected to a communication port of the personal computer via a RS232 cable.

7. The hand-held diagnosis device as claimed in claim 2, wherein
the button set (15) comprises two select-buttons (15a, 15c) and one confirm-button (15b);
and
the function-selecting unit (116) comprises two select-switches (116a, 116c) and one confirm-switch (16b) being correspondingly activated by the select-buttons (15a, 15c) and the confirm-button (15b) of the button set (15).

8. The hand-held diagnosis device as claimed in claim 1, wherein the storage interface (16) is implemented as a memory card socket for SD (Secure Data Disk), micro SD card and the like.

9. A method of updating the firmware of a hand-held diagnosis device as claimed in claim 1, the method comprising the steps of:
connecting the hand-held diagnosis device (1) to a personal computer (2), wherein the hand-held diagnosis device (1) has a MCU-firmware update program and the personal computer (2) has a firmware-updating program;
starting firmware-updating function (100), wherein the personal computer (2) executes the firmware-updating program and the firmware-updating program asks the diagnosis device (1) to response whether to start to update firmware;
determining whether to execute the firmware-updating function (101), wherein the MCU-firmware update program of the diagnosis device (1) determines whether to perform firmware-updating or diagnosing, if determines to update firmware, then response to the personal computer (2) to start to update firmware;
executing the firmware-updating function (102), wherein the personal computer (2) communicates with the diagnosis device (1) with a serial communication protocol via the communication port (13) of the diagnosis device (1), starts to transmit firmware-updating data after receiving a confirm signal from the diagnosis device (1) and stops updating firmware when an error occurs;
reading firmware-updating data (103), wherein the personal computer (2) reads the firmware-updating data and transmits the data to the diagnosis device (1) via the communication port (13);
writing the firmware-updating data (104), wherein the diagnosis device (1) stores the firmware-updating data after receiving the firmware-updating data;
determining whether transmission is finished (105), wherein the personal computer (2) determines whether all of the firmware-updating data have been transmitted to the diagnosis device (1), if not, proceed to step of reading firmware-updating data and stop updating firmware when an error occurs, if yes, proceed to next step;
transmission complete (106), wherein the personal computer (2) closes the firmware-updating program and sends a message that informs the firmware-updating process has been finished to the diagnosis device (1);
updating complete (107), wherein the diagnosis device (1) closes the MCU-firmware update program; and
rebooting (108), wherein the diagnosis device (1) automatically reboots and displays screen images of diagnosing on the display unit (12) after finishing updating firmware.

## Patentansprüche

1. Tragbare Diagnosevorrichtung (1) für ein Fahrzeug mit elektronischer Steuereinheit (ECU), wobei die tragbare Diagnosevorrichtung (1) einen Körper (10), ein Schaltungsmodul (11), welches im Körper (10) angebracht ist, eine Anzeigeeinheit (12), welche auf dem Körper (10) angebracht ist und mit dem Schaltungsmodul (11) verbunden ist, ein Kabel (13), welches ausgelegt ist, um mit der elektronischen Steuereinheit (ECU) des Fahrzeugs zu verbinden, und welches mit dem Schaltungsmodul (11) verbunden ist, und einen Knöpfesatz (15) umfasst, welcher auf dem Körper (10) angebracht ist und mit dem Schaltungsmodul (11) verbunden ist, wobei die tragbare Diagnosevorrichtung (1) **dadurch gekennzeichnet ist, dass**:
die tragbare Diagnosevorrichtung (1) einen Kommunikationsanschluss (13) aufweist, welcher auf dem Körper (10) angebracht und mit dem Schaltungsmodul (11) verbunden ist;
wobei das Schaltungsmodul (11) umfasst:
eine Mikrocontrollereinheit (111), welche aufweist:
einen Bootsektor mit einem MCU-Firmware-Aktualisierungsprogramm, und
einen Programmsektor;
eine diagnostizierende Einheit (112), welche mit der Mikrocontrollereinheit (111) und dem Kabel (14) und den diagnostizierenden Zuständen des Fahrzeugs über das Kabel (14) verbunden ist, wenn das Kabel (14) mit der elektronischen Steuereinheit (ECU) des Fahrzeugs verbunden ist;
und
einen Signalwandler (113), welcher mit der Mikrocontroller-Einheit (111) und dem Kommunikationsanschluss (13) verbunden ist und serielle Daten vom Kommunikationsanschluss (13) in ein lesbares Format für die Mikrocontrollereinheit (111) umwandelt;
eine Speicherschnittstelle (16), welche mit der Mikrocontrollereinheit (111) verbunden und ausgelegt ist, um eine Verbindung mit einer Speicherkarte herzustellen, die Diagnosedaten des Fahrzeugs aufzeichnet; und
der Kommunikationsanschluss (13) ausgelegt ist, um eine Verbindung mit einem Personalcomputer (2) herzustellen, welcher eine Computersoftware aufweist, die ein Firmware-Aktualisierungsprogramm bereitstellt, um dem Personalcomputer (2) zu erlauben, einen Firmware-Aktualisierungsvorgang auf der Mikrocontrollereinheit (111) durchzuführen; und
wobei die Diagnosevorrichtung (1) selbst in der Lage ist, die Firmware-Aktualisierungsdaten zu speichern, die sie vom Personalcomputer empfängt, und wobei sie ausgelegt ist, automatisch neu zu starten und Diagnosebildschirmbilder auf der Anzeigeneinheit (12) nach dem Abschließen der Aktualisierung der Firmware anzuzeigen.

2. Tragbare Diagnosevorrichtung nach Anspruch 1, wobei das Schaltungsmodul (11) des Weiteren umfasst:
eine Stromversorgungseinheit (110), welche Strom für alle elektronischen Elemente der tragbaren Diagnosevorrichtung (1) liefert;
eine Initialisierungseinheit (114), welche mit der Mikrocontrollereinheit (111) verbunden ist und eine Initialisierung der Mikrocontrollereinheit (111) nach dem Einschalten der tragbaren Diagnosevorrichtung (1) ausführt;
eine Alarmeinheit (115), welche mit der Mikrocontrollereinheit (111) verbunden ist und mehrere Licht abstrahlende Elemente zum jeweiligen Darstellen unterschiedlicher Betriebsinformationen der tragbaren Diagnosevorrichtung (1) aufweist; und
eine Funktionsauswahleinheit (116), welche mehrere Schalter aufweist, die mit der Mikrocontrollereinheit (111) verbunden sind, um der Mikrocontrollereinheit (111) zum Betätigen der Schalter zu befehlen.

3. Tragbare Diagnosevorrichtung nach Anspruch 1, wobei die Anzeigeeinheit (12) ein Flüssigkristallanzeigemodul ist.

4. Tragbare Diagnosevorrichtung nach Anspruch 1, wobei die diagnostizierende Einheit (112) einen Kommunikationssignal-Verarbeitungschip (112a) mit zwei Eingängen und einem Ausgang aufweist.

5. Tragbare Diagnosevorrichtung nach Anspruch 1, wobei der Kommunikationsanschluss (13) ein RS232 serieller Anschluss ist.

6. Tragbare Diagnosevorrichtung nach Anspruch 5, wobei der Kommunikationsanschluss (13) der Diagnosevorrichtung (112) ausgelegt ist, um elektrisch mit einem Kommunikationsanschluss des Personalcomputers über ein RS232-Kabel verbunden zu sein.

7. Tragbare Diagnosevorrichtung nach Anspruch 2, wobei
der Knöpfesatz (15) zwei Auswahlknöpfe (15a, 15c) und einen Bestätigungsknopf (15b) umfasst; und
die Funktionseinheit (116) zwei Auswahlschalter (116a, 116c) und einen Bestätigungsschalter (16b) umfasst, welche entsprechend durch die Auswahlknöpfe (15a, 15c) und den Bestätigungsknopf (15b) des Knöpfesatzes (15) aktiviert werden.

8. Tragbare Diagnosevorrichtung nach Anspruch 1, wobei die Speicherschnittstelle (16) als ein Speicherkartensockel für SD (Secure Data Disk), Mikro-SD-Karte und Ähnliches umgesetzt ist.

9. Verfahren zum Aktualisieren der Firmware einer tragbaren Diagnosevorrichtung nach Anspruch 1, wobei das Verfahren die Schritte umfasst:
Verbinden der tragbaren Diagnosevorrichtung (1) mit einem Personalcomputer (2), wobei die tragbare Diagnosevorrichtung (1) ein MCU-Firmware-Aktualisierungsprogramm und der Personalcomputer (2) ein Firmware-Aktualisierungsprogramm besitzt;
Starten der Firmware-Aktualisierungsfunktion (100), wobei der Personalcomputer (2) das Firmware-Aktualisierungsprogramm ausführt und das Firmware-Aktualisierungsprogramm die Diagnosevorrichtung (1) anfragt zu reagieren, ob das Aktualisieren der Firmware gestartet werden soll;
Bestimmen, ob die Firmware-Aktualisierungsfunktion (101) ausgeführt wird, wobei das MCU-Firmware-Aktualisierungsprogramm der Diagnosevorrichtung (1) bestimmt, ob sie die Firmware-Aktualisierung oder das Diagnostizieren ausführt, wobei sie, wenn sie bestimmt, die Firmware zu aktualisieren, dann dem Personalcomputer (2) antwortet, die Firmware-Aktualisierung zu beginnen;
Ausführen der Firmware-Aktualisierungsfunktion (102), wobei der Personalcomputer (2) mit der Diagnosevorrichtung (1) mit einem seriellen Kommunikationsprotokoll über den Kommunikationsanschluss (13) der Diagnosevorrichtung (1) kommuniziert, beginnt Firmware-Aktualisierungsdaten zu übertragen, nachdem er ein Bestätigungssignal von der Diagnosevorrichtung (1) empfangen hat, und die Aktualisierung der Firmware beendet, wenn ein Fehler auftritt;
Lesen der Firmeware-Aktualisierungsdaten (103), wobei der Personalcomputer (2) die Firmeware-Aktualisierungsdaten liest und die Daten auf die Diagnosevorrichtung (1) über den Kommunikationsanschluss (13) überträgt;
Schreiben der Firmeware-Aktualisierungsdaten (104),
wobei die Diagnosevorrichtung (1) die Firmeware-Aktualisierungsdaten nach dem Empfang der Firmeware-Aktualisierungsdaten speichert;
Bestimmen, ob die Übertragung beendet ist (105), wobei der Personalcomputer (2) bestimmt, ob alle Firmeware-Aktualisierungsdaten an die Diagnosevorrichtung (1) übertragen worden sind, wenn nicht, dann zum Schritt des Lesens der Firmeware-Aktualisierungsdaten weitergeht und das Aktualisieren der Firmware beendet, wenn ein Fehler auftritt, wenn ja, dann zum nächsten Schritt weitergeht;
Abschließen der Übertragung (106), wobei der Personalcomputer (2) das Firmeware-Aktualisierungsprogramm schließt und eine Botschaft an die Diagnosevorrichtung (1) sendet, welche darüber informiert, dass der Firmeware-Aktualisierungsvorgang beendet worden ist;
Abschließen der Aktualisierung (107), wobei die Diagnosevorrichtung (1) das MCU-Firmware-Aktualisierungsprogramm schließt; und
Neustarten (108), wobei die Diagnosevorrichtung (1) automatisch neu startet und Diagnosebildschirmbilder auf der Anzeigeeinheit (12) nach dem Beenden des Aktualisierens der Firmware anzeigt.

## Revendications

1. Dispositif de diagnostic portatif (1) pour véhicule muni d'une unité de commande électronique (ECU), le dispositif de diagnostic portatif (1) comprenant un corps (10), un module de circuit (11) monté dans le corps (10), une unité d'affichage (12) étant montée sur le corps (10) et connectée au module de circuit (11), un câble (13) étant adapté pour se connecter à l'unité de commande électronique (ECU) du véhicule et étant connecté au module de circuit (11), et un ensemble de boutons (15) étant monté sur le corps (10) et connecté au module de circuit (11), le dispositif de diagnostic portatif (1) étant **caractérisé en ce que** :
le dispositif de diagnostic portatif (1) a un port de communication (13) monté sur le corps (10) et connecté au module de circuit (11) ;
le module de circuit (11) comprend :
une unité de microcontrôleur (111) comportant
un secteur d'amorçage comportant un programme de mise à jour de microprogramme d'unité de microcontrôleur ; et
un secteur de programme ;
une unité de diagnostic (112) connectée à l'unité de microcontrôleur (111) et au câble (14) et qui examine les états du véhicule via le câble (14) quand le câble (14) se connecte à l'unité de commande électronique (ECU) du véhicule ; et
un convertisseur de signaux (113) connecté à l'unité de microcontrôleur (111) et au port de communication (13) et convertissant des données série provenant du port de communication (13) en un format lisible pour l'unité de microcontrôleur (111) ;
une interface de stockage (16) connectée à l'unité de microcontrôleur (111) et adaptée pour se connecter à une carte mémoire qui enregistre les données de diagnostic du véhicule ; et
le port de communication (13) est adapté pour se connecter à un ordinateur personnel (2) comportant un logiciel informatique fournissant un programme de mise à jour de microprogramme pour permettre à l'ordinateur personnel (2) d'exécuter un processus de mise à jour de microprogramme sur l'unité de microcontrôleur (111) ; et
dans lequel le dispositif de diagnostic (1) lui-même est capable de stocker les données de mise à jour de microprogramme transmises par l'ordinateur personnel et est adapté pour réamorcer et afficher automatiquement des images d'écran du diagnostic sur l'unité d'affichage (12) après avoir fini la mise à jour du microprogramme.

2. Dispositif de diagnostic portatif selon la revendication 1, dans lequel le module de circuit (11) comprend en outre :
une unité d'alimentation électrique (110) fournissant de l'énergie à tous les éléments électroniques du dispositif de diagnostic portatif (1) ;
une unité d'initialisation (114) connectée à l'unité de microcontrôleur (111) et exécutant une initialisation de l'unité de microcontrôleur (111) après avoir allumé le dispositif de diagnostic portatif (1) ;
une unité d'alarme (115) connectée à l'unité de microcontrôleur (111) et comportant de multiples éléments émettant de la lumière pour représenter respectivement différentes informations de fonctionnement du dispositif de diagnostic portatif (1) ; et
une unité de sélection de fonctions (116) comportant plusieurs interrupteurs connectés à l'unité de microcontrôleur (111) pour commander l'unité de microcontrôleur (111) en activant les interrupteurs.

3. Dispositif de diagnostic portatif selon la revendication 1, dans lequel l'unité d'affichage (12) est un module d'affichage à cristaux liquides.

4. Dispositif de diagnostic portatif selon la revendication 1, dans lequel l'unité de diagnostic (112) comporte une puce de traitement de signaux de communication (112a) à deux entrées et une sortie.

5. Dispositif de diagnostic portatif selon la revendication 1, dans lequel le port de communication (13) est un port série RS232.

6. Dispositif de diagnostic portatif selon la revendication 5, dans lequel le port de communication (13) du dispositif de diagnostic (112) est adapté pour être connecté électriquement à un port de communication de l'ordinateur personnel via un câble RS232.

7. Dispositif de diagnostic portatif selon la revendication 2, dans lequel :
l'ensemble de boutons (15) comprend deux boutons de sélection (15a, 15c) et un bouton de confirmation (15b) ; et
l'unité de sélection de fonctions (116) comprend deux interrupteurs de sélection (116a, 116c) et un interrupteur de confirmation (16b) qui sont activés de façon correspondante par les boutons de sélection (15a, 15c) et le bouton de confirmation (15b) de l'ensemble de boutons (15).

8. Dispositif de diagnostic portatif selon la revendication 1, dans lequel l'interface de stockage (16) est mise en oeuvre sous la forme d'un connecteur de carte mémoire pour carte SD (*Secure Data Disk*)*,* micro SD et similaires.

9. Procédé de mise à jour du microprogramme d'un dispositif de diagnostic portatif selon la revendication 1, le procédé comprenant les étapes suivantes :
connecter le dispositif de diagnostic portatif (1) à un ordinateur personnel (2), dans lequel le dispositif de diagnostic portatif (1) comporte un programme de mise à jour de microprogramme d'unité de microcontrôleur et l'ordinateur personnel (2) comporte un programme de mise à jour de microprogramme ;
démarrer une fonction de mise à jour de microprogramme (100), dans laquelle l'ordinateur personnel (2) exécute le programme de mise à jour de microprogramme et le programme de mise à jour de microprogramme demande au dispositif de diagnostic (1) s'il faut démarrer la mise à jour du microprogramme ;
déterminer s'il faut exécuter la fonction de mise à jour de microprogramme (101), où le programme de mise à jour de microprogramme d'unité de microcontrôleur du dispositif de diagnostic (1) détermine s'il faut réaliser la mise à jour du microprogramme ou s'il faut réaliser un diagnostic, et s'il détermine qu'il faut mettre à jour le microprogramme, alors il ordonne à l'ordinateur personnel (2) de démarrer la mise à jour du microprogramme ;
exécuter la fonction de mise à jour de microprogramme (102), dans laquelle l'ordinateur personnel (2) communique avec le dispositif de diagnostic (1) avec un protocole de communication série via le port de communication (13) du dispositif de diagnostic (1), commence à transmettre des données de mise à jour de microprogramme après avoir reçu un signal de confirmation du dispositif de diagnostic (1) et arrête la mise à jour du microprogramme quand une erreur se produit ;
lire des données de mise à jour de microprogramme (103), où l'ordinateur personnel (2) lit les données de mise à jour de microprogramme et transmet les données au dispositif de diagnostic (1) via le port de communication (13) ;
écrire les données de mise à jour de microprogramme (104), où le dispositif de diagnostic (1) mémorise les données de mise à jour de microprogramme après avoir reçu les données de mise à jour de microprogramme ;
déterminer si la transmission est finie (105), où l'ordinateur personnel (2) détermine si toutes les données de mise à jour de microprogramme ont été transmises au dispositif de diagnostic (1), si ce n'est pas le cas, passer à l'étape de lecture de données de mise à jour de microprogramme et arrêter la mise à jour du microprogramme quand une erreur se produit, si c'est le cas, passer à l'étape suivante ;
achever la transmission (106), où l'ordinateur personnel (2) ferme le programme de mise à jour de microprogramme et envoie un message qui informe le dispositif de diagnostic (1) que le processus de mise à jour du microprogramme est terminé ;
achever la mise à jour (107), où le dispositif de diagnostic (1) ferme le programme de mise à jour de microprogramme d'unité de microcontrôleur ; et
réamorcer (108), où le dispositif de diagnostic (1) réamorce et affiche automatiquement des images d'écran de diagnostic sur l'unité d'affichage (12) après avoir fini la mise à jour du microprogramme.
